# EUROPEAN PATENT APPLICATION

(11) **EP 4 424 583 A1**
(43) Date of publication of application: **04.09.2024**
(21) Application number: 22886195.1
(22) Date of filing: 26.09.2022
(51) Int. Cl.: B63B 27/14, B65G 67/60

(54) **SYSTEM FOR LOADING AND UNLOADING CONTAINER VESSELS**

(30) Priority: 29.10.2021 ES 202132132 U
(71) Applicant: Márquez Sarabia, Cristina, 39700 Castro Urdiales Cantabria (ES); Márquez Sarabia, Verónica, 39700 Castro Urdiales Cantabria (ES)
(72) Inventor: MÁRQUEZ PARDO, José María, 39700 Castro Urdiales (Cantabria) (ES)
(74) Representative: Ungria López, Javier
(86) International application number: PCT/ES2022/070611
(87) International publication number: WO 2023/073259

(57) **Abstract**

The present invention discloses a system for loading and unloading container vessels. The invention comprises: a dock (1) which can be flooded such that the water level therein can be altered and which includes two platforms (2); and a vessel (5) with a deck (6), which is intended to be housed in the dock (1) disposed between the platforms (2). Both the platforms (2) and the deck (6) of the vessel (5) comprise rails (8), intended to face each other, such that first containers (9) disposed on one of the platforms (2) are loaded onto the vessel (5) at the same time that second containers (10) are unloaded from the vessel (5) towards the other platform (2), the containers being moved along the rails (8) of the platforms (2) and vessel (5).

## Description

### OBJECT OF THE INVENTION

The object of the present invention is comprised in the technical field of systems for loading and unloading container vessels. The proposed system optimises said operations, thereby reducing the time spent on said operations and the associated costs.

### TECHNICAL PROBLEM TO BE RESOLVED AND BACKGROUND OF THE INVENTION

Today, loading and unloading operations for vessels that transport containers with goods require a long mooring time in port. Likewise, there is a need to use large cranes which are in charge of gradually unloading all the containers from the vessel until it is empty and then filled it again with the containers to transported. Therefore, use of external resources such as, for example, cranes, and intensive labour are required.

Since the complete unloading and reloading of the vessel require a long time, payment of higher taxes in ports and longer mooring times are required.

### DESCRIPTION OF THE INVENTION

The invention relates to a system for optimising the loading and unloading of container vessels.

The system essentially comprises a dock, with specific technical features, and a vessel container, which also has specific features, adapted to the type of dock and the loading/unloading method.

The dock of the system is a dock which can be flooded, comprising two identical platforms which, when the container vessel is housed in the dock, are disposed on both sides of the vessel.

As a result of the dock being able to be flooded, the interior thereof can be filled or emptied depending on the position of the vessel with respect to the side platforms. Therefore, if there is a need to introduce water into the interior of the dock in order to raise the vessel, water from at least one water reserve tank of the dock is used, with water stored with tides in the dock itself. If there is a need to extract water in order to reduce the level of water in the interior of the dock, and therefore the height at which the vessel is arranged, then gates are opened until the vessel is lowered to the level of the platforms.

The side platforms are platforms for loading and unloading comprising rails and transport carriages with which the containers to be loaded and unloaded are moved. Likewise, the platforms comprise bridging arms extending towards the vessel (when it is in the dock) and allowing access between the platform and the vessel.

The dock also comprises tongued-and-grooved positioners, moorings and positioners disposed under the waterline. These elements allow correct positioning of the vessel with respect to the platforms and secure said position during loading and unloading operations.

As a result of these described technical features, the vessel is immobilised in the interior of the dock and at the same level of the side platforms for loading and unloading.

The container vessel of the proposed system comprises a clear, flat and level deck. A plurality of rails along which the containers will circulate is arranged on said deck. In other words, they comprise a network of transverse rails for loading and unloading the containers which move on said rails. Preferably, it comprises transport carriages that allow the mobilisation of the containers. Likewise, it comprises female housings for connection with the tongued-and-grooved positioners of the dock, allowing the position of the vessel to be fixed with respect to the dock during the loading/unloading operations.

Container loading and unloading operations can thus be performed simultaneously from one of the platforms of the dock in which the containers to be loaded onto the vessel are disposed to the other platform which receives the containers that are unloaded from the vessel. The time required to perform the loading and unloading operations with the current systems is thereby drastically reduced, and therefore the port stay and costs of these operations are reduced.

To enable the loading and unloading operations to be carried out simultaneously, there is first performed a pre-loading, i.e., all the containers that are to be loaded onto the vessel are placed in the corresponding platform.

The load to be transported in the vessel is always housed in containers, and said containers are preferably all the same to ensure the relative position of the containers with respect to each other and to the rails and the transport carriages. Transport-associated safety is improved because the vessel loads are distributed more homogeneously and furthermore the entire loading capacity of the vessel can be used. The containers always carry goods therein (both goods that will be loaded on the vessel and goods that were being transported on the vessel and unloaded at the dock). Therefore, the use of containers is optimised and the vessel and said containers are fully utilised.

The proposed system allows loading and unloading operations to be performed without requiring direct intervention of cranes. Furthermore, human intervention in these operations is reduced, and therefore manpower and the risks associated with load handling are reduced.

Furthermore, the major advantage associated with the drastic reduction of time spent on the loading/unloading operations is that costs associated with taxes, port stay, manpower, etc., are reduced.

In an embodiment of the invention, the vessel comprises on the deck at least one fixed superstructure capable of storing up to 8 containers in height. Said superstructure is a frame housing therein the containers and providing stability to the assembly, preventing the containers from moving to the stern or bow. Preferably, the vessel comprises in the upper part of said fixed superstructure a plurality of solar panels which contribute to the provision of electrical energy to be used in the operation of the vessel or movement of the containers. In other words, said energy can be used for the vessel's own consumption. This furthermore allows reducing pollution (it is not necessary to use other resources such as, for example, fuels, to obtain energy).

In the embodiments in which the vessel comprises the superstructure, the vessel preferably comprises moorings and bracings for mooring and bracing said superstructure to land, which contributes to securing the connection of the superstructure to land.

In one embodiment, the vessel can be also intended for the transport of vehicles, in which case it comprises at least one housing under the deck for storing vehicles. Preferably, it comprises two holds for storing vehicles and a folding stern gate for the passage of these vehicles to the holds.

### BRIEF DESCRIPTION OF THE FIGURES

To complete the description, and for the purpose of helping to make the features of the invention more readily understandable, this description is accompanied by a set of drawings constituting an integral part of the same, which by way of illustration and not limitation represents the following:
Figure 1 depicts a top view of the system for loading and unloading.
Figure 2 depicts a sectioned side view of the system in which the vessel can be seen housed in the dock.
Figure 3 depicts a sectioned front view of the system with the vessel housed in the dock.
Figures 4A-4F depict a sequence of the loading and unloading operations.
Figures 5A-5L depict a detailed sequence of a simultaneous loading and unloading stowage pattern.

Below, a list is provided of the different elements represented in the figures making up the invention:
1. Dock
2. Platform
3. Interior of the dock
4. Gate
5. Vessel
6. Deck
7. Superstructure
8. Rail
9. First containers
10. Second containers
11. Water

### DETAILED DESCRIPTION

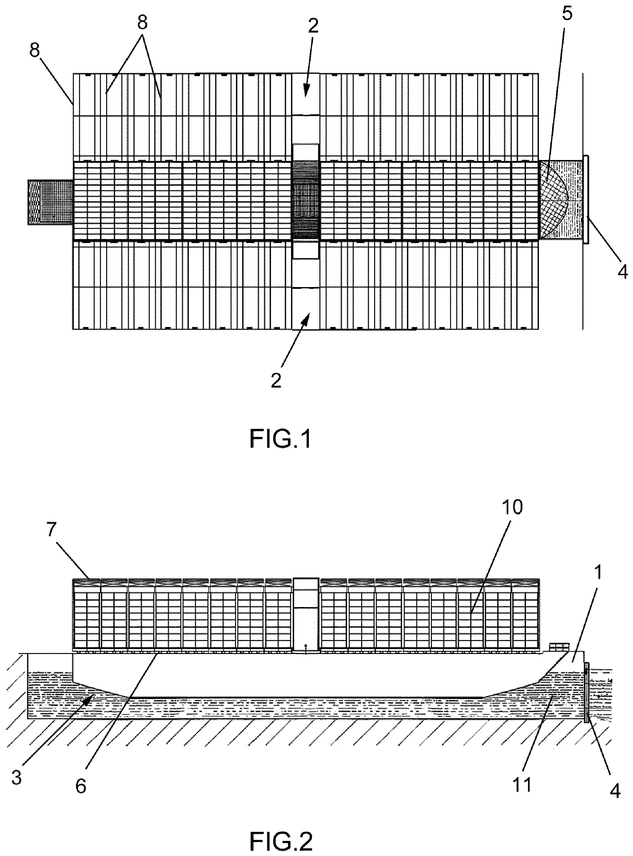

Figure 1 shows a top view of the system for loading and unloading. The system comprises a dock (1) with two platforms (2) for loading and unloading disposed on the sides of the interior (3) of the dock in which there is water (11) and in which a vessel (5) is housed. The system also comprises the vessel (5) itself in which containers will be transported and which, during loading and unloading operations, is housed in said interior (3) of the dock (1) and is configured to be moored to the platforms (2), disposed between them.

Throughout the description and to make it easier to explain the method for loading and unloading, first containers (9) refer to containers that will be loaded onto the vessel (5) and second containers (10) refer to containers that will be unloaded from the vessel (5).

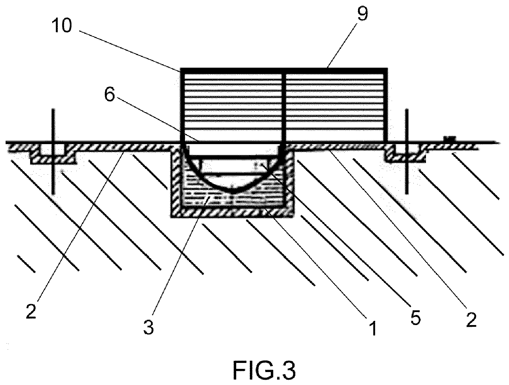

Figure 2 depicts a side view of the system for loading and unloading with the vessel (5) loaded with second containers (10). In the described system, the dock (1) is a dock which can be flooded such that the water level therein can be altered. Figure 3 shows a sectioned front view of the system in which said levelling of water for a deck (6) of the vessel (5) to be at the same height as the platforms (2) is observed.

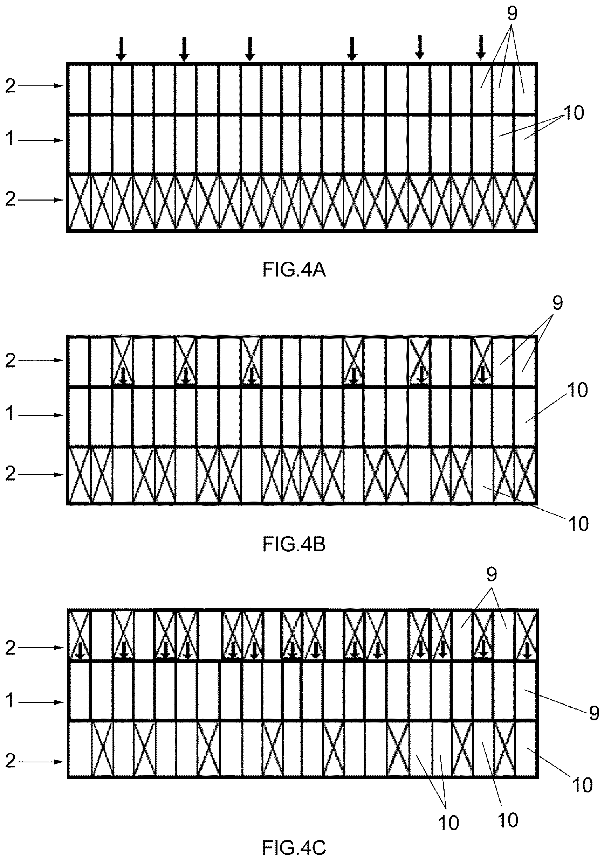

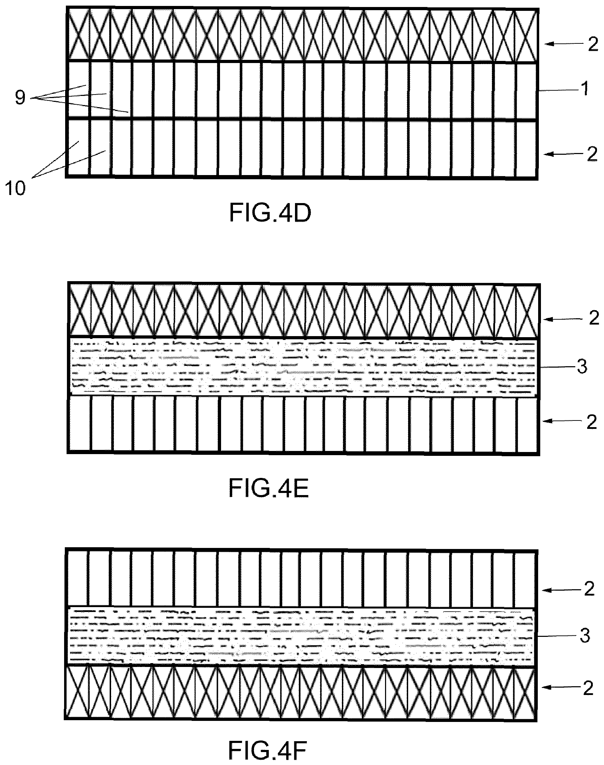

Both the platforms (2) and the deck (6) of the vessel (5) comprise rails (8), intended to face each other, such that first containers (9) disposed on one of the platforms (2) are loaded onto the vessel (5) at the same time that second containers (10) are unloaded from the vessel (5) towards the other platform (2), the containers being moved along the rails (8) of the platforms (2) and vessel (5). Figures 4A-4F depict a sequence of said loading and unloading operations.

The dock (1) of the system may comprise at least one water tank configured for storing water from the interior (3) of the dock (1) when the tide rises and for releasing it to the interior (3) of the dock (1) to regulate the level of flotation of the vessel (5) with respect to the platforms (2). In one embodiment, the dock (1) also comprises at least one gate (4) for the exit of water (11) from the interior (3) of the dock (1) and pumping equipment to regulate the level of flotation of the vessel (5) with respect to the platforms (2).

The platforms (2) preferably comprise arms extending towards the space between both platforms, in which the vessel (5) is housed when it is in the dock (1), and allowing access from the platform (2) to the vessel (5) and vice versa.

The platforms (2) may also comprise tongued-and-grooved positioners, moorings and/or positioners below the waterline configured for connecting the vessel (5) to the platforms (2) and securing said connection. In this case, the vessel (5) preferably comprises female housings configured for receiving the tongued-and-grooved positioners of the platforms (2).

The figures also show an embodiment in which the vessel (5) comprises, on the deck (6), a superstructure (7) with a frame intended for housing the containers (9, 10) stacked in height. In these cases, the superstructure (7) may comprise a plurality of solar panels on an upper surface of the frame. Likewise, said superstructure (7) may comprise mooring and bracing elements configured to allow connecting the superstructure (7) to the platforms (2).

Furthermore, in one embodiment, to increase the loading capacity of the vessel (5), it comprises a hold capable of housing vehicles.

In one embodiment, the vessel has a length of between 200 m and 250 m and a beam of approximately between 30 m and 35 m. In one embodiment, it comprises 2500 solar panels installed on the upper part of the fixed superstructures.

The dock of the system preferably has a greater length than the vessel. In one embodiment, said length is at least 20 m greater than the length of the vessel. The width of the dock is at most 2 m more than the beam of the vessel of the system.

### Loading and unloading method

In the dock (1), rails (8), along which transport carriages move the containers, are located on the platforms (2). Furthermore, said carriages are loaded with up to eight first containers (9) in height. If the containers are 20-foot containers, the transport carriages are loaded with a maximum of 224 containers and if they are 40-foot containers, the transport carriages are loaded with a maximum of 112 containers. This operation of placing all the first containers (9) to be loaded onto the vessel (5) on one of the platforms (2) is referred to as pre-loading.

When the vessel (5) of the system accesses the dock (1), it is loaded with second containers (10). At this time the vessel (5) is loaded and enters the dock (1) until the stern of the vessel (5) reaches the back of the dock (1). Next, the gates of the dock (1) are closed and the level of water in the interior (3) thereof is regulated, altering the level of flotation of the vessel (5) until its deck (6) is at the same level as the platforms (2). To that end, water is introduced into the interior (3) of the dock (1) from the at least one tank or water is removed from the interior (3) of the dock (1) by means of the emptying system with a water reserve tank with pumping equipment and gates.

Preferably, the water tanks on the dock (1) are cisterns, disposed on the sides of the platforms (2) and filled with the high tide while the dock (1) is open, without requiring pumping systems. The emptying of water from the interior (3) of the dock (1) can also be performed without using pumping systems, by simply controlling gate systems that allows said emptying to be performed.

When the vessel (5) has been levelled, it is moored and fixed until the loading and unloading operations end. Preferably, the non-mobility of the vessel is ensured by means of eight tongued-and-grooved positioners, disposed facing each other, four on port side and four on starboard side. In one embodiment, said tongued-and-grooved positioners are hydraulic plungers with horizontal displacement. Female housings intended for receiving said tongued-and-grooved positioners are located in the vessel (5).

In order to further secure the fixing, four other conventional-type moorings, cables, ropes, etc., are provided, two of them at the bow and two at the stern, in the respective bollards thereof (post or any other element which is used for securing the mooring lines of the vessels).

In the cases of adverse weather conditions and of wind that exceed 10 km/h, mooring lines can also be laid from the top of the superstructure (7) to the platform (2), thereby counteracting the lateral thrust action of the wind. In this case, positioners below the waterline can also be activated. These positioners can be, for example, balloons filled with water pressurised at 2 kg/cm² with an approximate unit volume of 1 m³.

Once the vessel (5) is correctly moored and secured, the arms connecting the sliding rails (8) of the platforms (2) are hydraulically positioned, allowing the transfer of the second containers (10) (which will be unloaded from the vessel (5)) from the deck (6) of the vessel (5) to the platform (2). Simultaneously, the corresponding first containers (9), which are housed in the spaces that are being left by the second containers (10) which are being unloaded, are moved to the deck (6) of the vessel (5).

The stowage pattern is previously established and must comply with the fact of simultaneously moving two containers from those which are disposed in the stern and two containers from those which are disposed in the bow. Two other containers from the stern and two other containers from the bow are then moved. The simultaneous loading and unloading operations are repeated following this pattern until all of the corresponding operations for unloading and loading the vessel (5) have been performed. Preferably, the operations are performed at intervals of between 5 and 10 minutes between series. It is a sequential and simultaneous operation and this is the key for the proposed system for loading and unloading and the proposed method to provide the advantages described above.

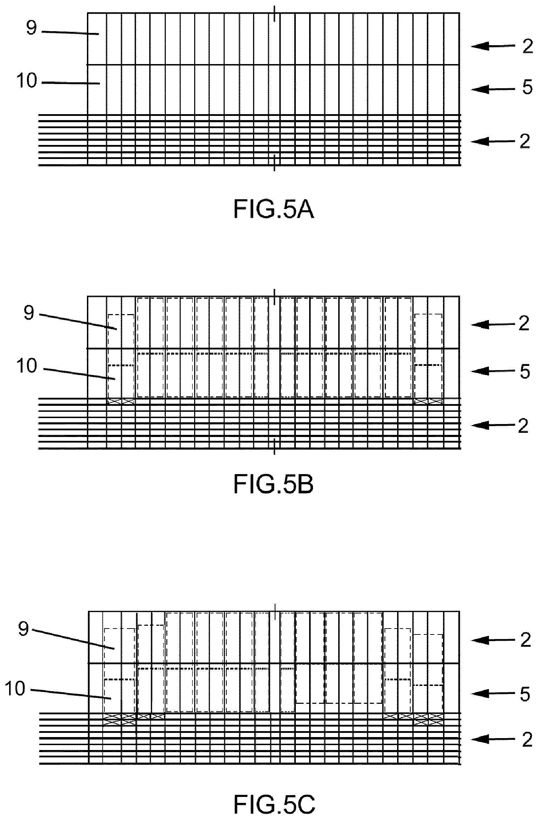

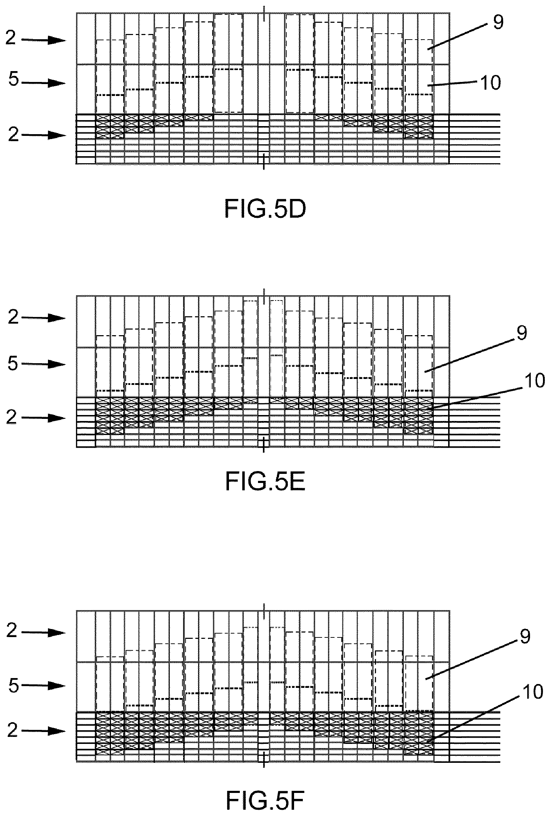

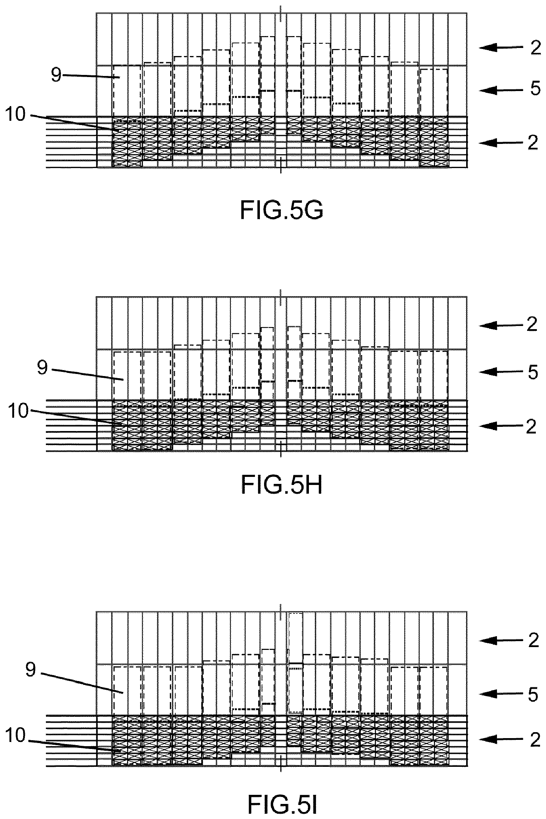

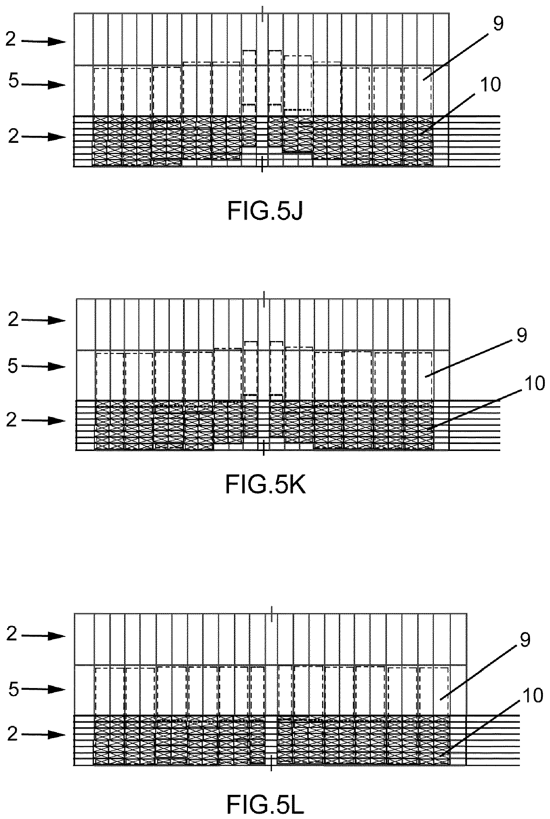

Figures 5A-5L show an example of a detailed sequence of a simultaneous loading and unloading stowage pattern.

When all the first containers (9) have already been loaded and all the second containers (10) unloaded, mooring lines and fixing elements are removed and the levels of flotation in the interior (3) of the dock (1) and the exterior thereof is equalised by opening the gate of the dock (1). Mooring lines, if they have been placed, are also released from the superstructure (7) and the vessel (5) is now towed or its own propulsion is carried out.

In the embodiments in which the vessel (5) comprises solar panels in the upper part of the superstructure (7), about 6000 Kw/hour of energy can be generated daily and it can be used to power the equipment of the vessel (5) and/or in the platforms (2) for loading and unloading.

Likewise, in the cases in which the vessel (5) of the system is also used for transporting vehicles in its holds, a stowage unloading plan is established by intervening in the stay of the deck level and the necessary ballast relocation distributions.

Therefore, in a preferred embodiment, the method for loading and unloading container vessels by means of the system described above comprises at least the following steps:
a) disposing first containers (9) on the rails (8) of one of the platforms (2);
b) introducing the vessel (5) loaded with second containers (10) into the interior (3) of the dock (1), between the platforms (2);
c) closing the gates (4) of the dock (1) and regulating the amount of water (11) in the interior thereof, altering the level of flotation of the vessel (5) until the deck (6) is at the same level as the platforms (2);
d) mooring the vessel (5) to the platforms (2);
e) simultaneously moving, along the rails (8), the first containers (9) from the corresponding platform (2) to the deck (6) of the vessel (5) and the second containers (10) from the deck (6) of the vessel (5) to the other platform (2) of the dock (1), such that the first containers (9) are disposed in the spaces of the deck (6) that are being left as a result the unloading of the second containers (10);
f) removing the mooring of the vessel (5) to the platforms (2);
g) opening the gate (4) of the dock (1), regulating the water level (11) of the interior (3) of the dock (1) and the exterior thereof;
h) towing or propelling the vessel (5) to the exterior of the dock (1).

Preferably, after performing step d), a step of positioning arms of the platforms (2) is performed, moving them towards the vessel (5), such that the rails (8) of the platforms (2) move closer to the rails (8) of the deck (6) of the vessel (5).

The steps of transporting the containers (9, 10) i.e., the steps of loading the first containers (9) and unloading the second containers (10) are performed by moving the containers along the rails (8) by means of transport carriages.

In step b), the vessel (5) preferably enters the dock (1) until its stern reaches the back of the dock (1).

The levelling of the water (11) in the interior (3) of the dock (1) of step c) is performed with sub-steps of introducing water (11) into the interior (3) of the dock (1) from at least one tank of the dock (1) and/or of removing water from the interior (3) of the dock (1) by means of an emptying system.

In the cases in which the vessel (5) of the system comprises a superstructure (7), a step of mooring said superstructure (7) to the platforms is furthermore performed. Generally, this step is performed after step d).

Therefore, in one embodiment, three hours would be spent for mobilising 3584 unloaded 20-foot containers plus another 3584 loaded containers. In other words, a total of 7168 20-foot containers are mobilised at a rate of 40 containers per minute, a number which is absolutely different and far from one of the records established in year 2020 which involved the mobilisation of 2 containers per minute in a loading and unloading operation of a total of 8701 containers performed in 72 hours. The ratio is therefore 40 to 2, i.e., the present invention allows obtaining an efficiency 20 times greater than that obtained with the current loading/unloading solutions. This difference entails to a huge economic benefit.

The present invention should not be limited to the embodiment described herein. Other configurations may be carried out by those skilled in the art based on the present description. Accordingly, the scope of the invention is defined by the following claims.

## Claims

1. A system for loading and unloading container vessels comprising a dock (1) which can be flooded such that the water level therein can be altered and which includes two platforms (2), and comprises a vessel (5), with a deck (6), which is intended to be housed in the dock (1) disposed between the platforms (2) and both the platforms (2) and the deck (6) of the vessel (5) comprise rails (8), intended to face each other, such that first containers (9) disposed on one of the platforms (2) are loaded onto the vessel (5) at the same time that second containers (10) are unloaded from the vessel (5) towards the other platform (2), the containers being moved along said rails (8) of the platforms (2) and vessel (5).

2. The system for loading and unloading container vessels according to claim 1, wherein the dock (1) comprises at least one water reserve tank configured for storing water from the interior (3) of the dock (1) when the tide rises and for releasing it to the interior (3) of the dock (1) to regulate the level of flotation of the vessel (5) with respect to the platforms (2).

3. The system for loading and unloading container vessels according to any one of the preceding claims, wherein the dock (1) comprises at least one gate (4) for the exit of water (11) from the interior (3) of the dock (1) and pumping equipment to regulate the level of flotation of the vessel (5) with respect to the platforms (2).

4. The system for loading and unloading container vessels according to any one of the preceding claims, wherein the platforms (2) comprise arms extending towards the space between both platforms, in which the vessel (5) is housed when it is in the dock (1), and allowing access from the platform (2) to the vessel (5) and vice versa.

5. The system for loading and unloading container vessels according to any one of the preceding claims, wherein the platforms (2) comprise tongued-and-grooved positioners, moorings and/or positioners below the waterline configured for connecting the vessel (5) to the platforms (2) and securing said connection.

6. The system for loading and unloading container vessels according to claim 5, wherein the vessel (5) comprises female housings configured for receiving the tongued-and-grooved positioners of the platforms (2).

7. The system for loading and unloading container vessels according to any one of the preceding claims, wherein the vessel (5) comprises, on the deck (6), a superstructure (7) with a frame intended for housing the containers (9, 10) stacked in height.

8. The system for loading and unloading container vessels according to claim 7, wherein the superstructure (7) comprises a plurality of solar panels on an upper surface of the frame.

9. The system for loading and unloading container vessels according to any one of claims 7 to 8, wherein the superstructure (7) comprises mooring and bracing elements configured to allow connecting the superstructure (7) to the platforms (2).

10. The system for loading and unloading container vessels according to any one of the preceding claims, wherein the vessel (5) comprises a hold capable of housing vehicles.
